# EUROPEAN PATENT SPECIFICATION

(11) **EP 0 364 226 B1**
(45) Date of publication and mention of the grant of the patent: **01.05.1996**
(21) Application number: 89310373.9
(22) Date of filing: 11.10.1989
(51) Int. Cl.: G06F 9/46

(54) **A system for performing a serializing control of a reference to a main storage**
Seriellumsetzungssteuerungssystem für Hauptspeicherreferenz
Système de commande pour la conversion en sériel pour référence à une mémoire principale

(30) Priority: 12.10.1988 JP 256604/88
(43) Date of publication of application: 18.04.1990
(73) Proprietor: FUJITSU LIMITED, Kawasaki-shi, Kanagawa 211 (JP)
(72) Inventor: Inoue, Aiichiro, Midori-ku Yokohama-shi Kanagawa 226 (JP)
(74) Representative: Stebbing, Timothy Charles

(56) References cited:
- EP-A- 0 130 593
- US-A- 4 754 398
- US-A- 4 984 153

## Description

The present invention relates to the serialization control of main storage accesses by central processing units (CPUs) in a multi-CPU information processing system having a common main storage unit (MSU).

In such a system, multiple fetch or store accesses from the CPUs to the MSU can occur at the same time. It is necessary to ensure that these accesses are conducted in accordance with a predetermined order of instructions, and that instructions are executed in accordance with a predetermined set of operands in a predetermined order.

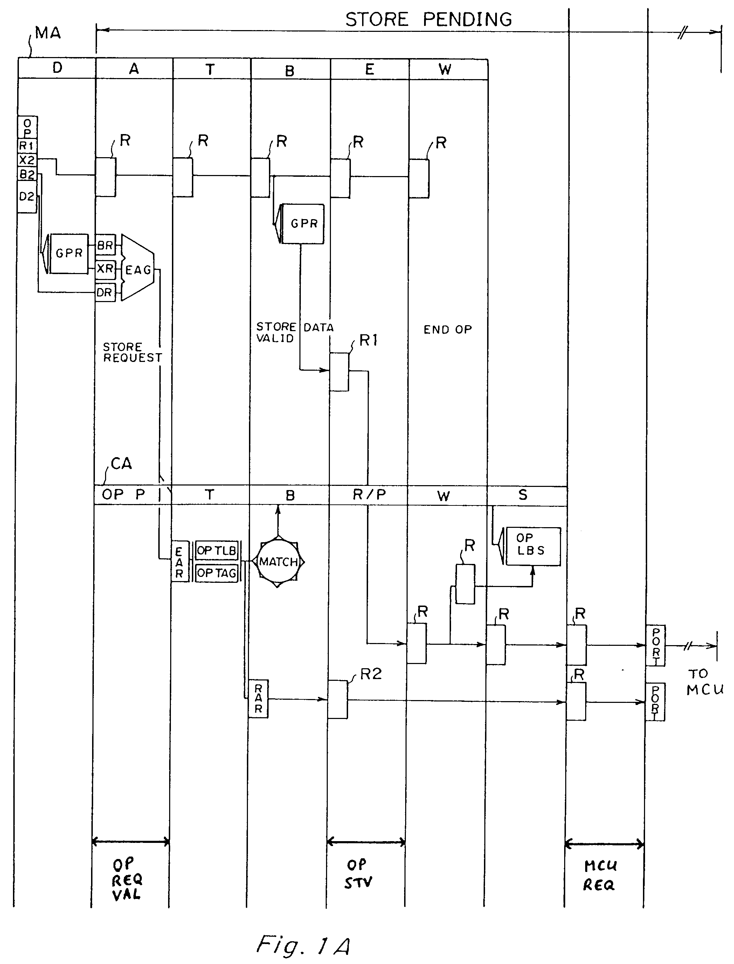

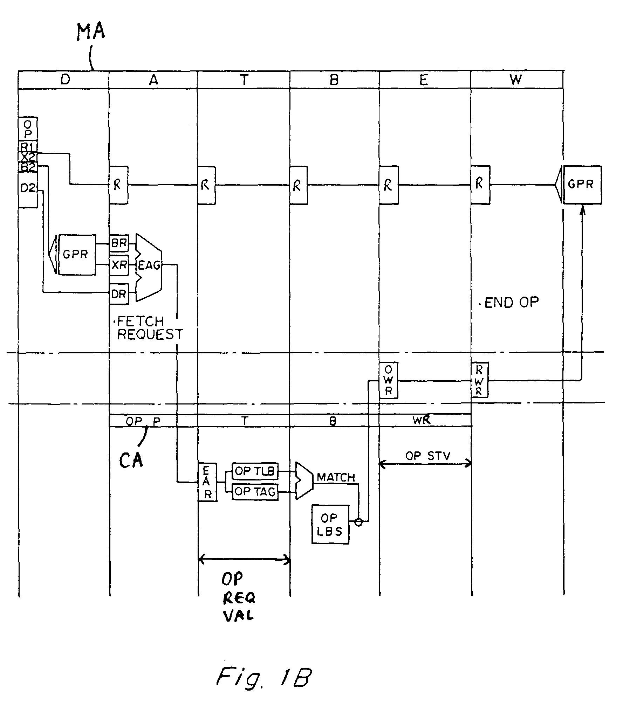

If a cache memory is provided in each individual CPU, a STORE access is conducted through the MSU and is thus slow, but a FETCH is conducted only through the cache and is thus fast, as shown in Figures 1A and 1B.

As shown in Figure 1A, an instruction I comprises an OP code (operand code) and address portions such as a first operand register number R1, a second operand index register number R2, a second operand base register number B2 and a second operand displacement D2. A STORE is conducted as follows. In a pipeline operation MA for a main storage access, the OP code of the instruction I is decoded in a D-cycle and the instruction I is used for accessing a general purpose register GPR. A signal of the address portion R1 is transmitted to a register R and to the next register R in the next cycle, and so on.

In an A-cycle, the contents of GPR are added to the displacement D2 for a logical address in effective address generator EAG, thereby providing an effective address. Then, in a pipeline operation CA for a cache access, the priority for a store request by operand request valid signal OP REQ VAL is determined in an operand request priority cycle OPP.

In a T-cycle, it is detected whether or not the effective address exists in a cache. A cache comprises a translation look-aside buffer TLB, a tag TAG and a local buffer Storage LBS. If the effective address matches the addresses existing in TLB and TAG, a real address for accessing LBS is set in real address register RAR. On the other hand, in a B-cycle, the WRITE data is obtained from another general purpose register GPR based on the address transmitted from instruction I.

In an E-cycle, the WRITE data is set in register R1, while the real address is set in a register R2 in an R-cycle. The WRITE data are stored in a register in accordance with operand status signal OP STV, and subsequently in another register R in a W-cycle, and in LBS in an S-cycle.

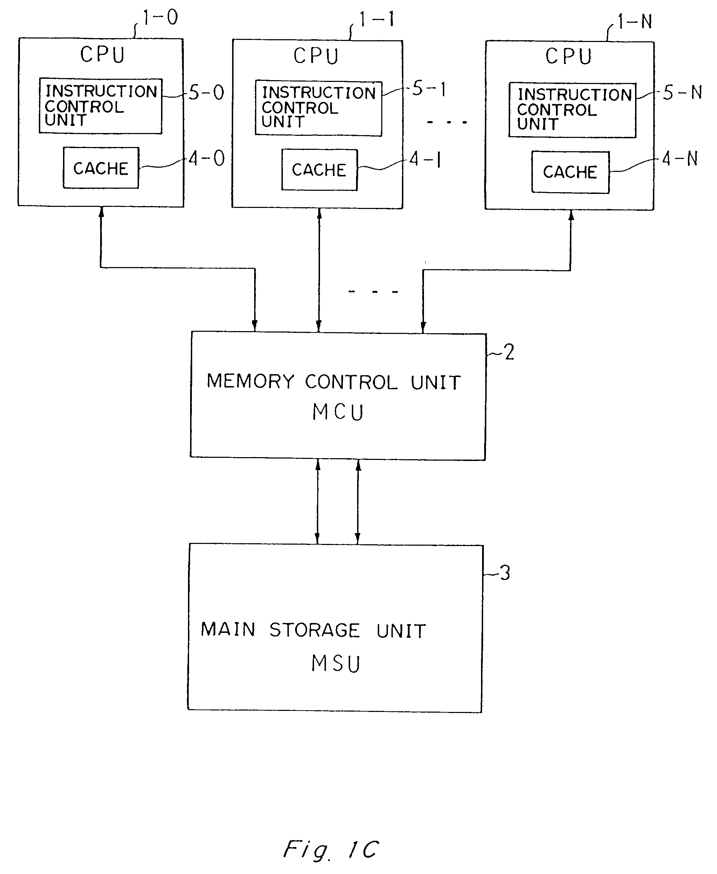

The WRITE data and the real address are respectively transmitted to a memory control unit (MCU; see FIG. 1C) through register R and a port PORT by memory control unit request signal MCU REQ so that the WRITE data can be stored in the MSU after completion of one execution cycle of one instruction. Therefore, it takes time to store the WRITE data in the MSU.

A FETCH operation is shown in Figure 1B. In an A-cycle, an effective address is obtained based on address portions B2 and D2 of instruction I, and the priority for a fetch request by a signal OP REQ VAL is determined in an OPP cycle. It is determined in a T-cycle by referring to the TLB and TAG, whether or not the effective address exists in the cache. If it does, the data is obtained from LBS in a B-cycle and transmitted to result word register RWR through operand work register OWR in accordance with a signal OP STV in an E-cycle. Moreover, the data is transmitted from RWR and stored in a general purpose register GPR after a W-cycle. It is thereby subjected to a fetch operation before completion of an execution cycle of an instruction.

Therefore, when a FETCH instruction is produced after a STORE instruction, the actual fetch operation is completed before the STORE operation. Thus, previous data on which the result of STORE is not yet reflected is fetched by the FETCH operation. In order to fetch the new data in which the result of STORE is properly reflected, it is necessary to perform a serializing process by providing a serialization request signal.

As mentioned, in a system wherein a MSU is shared by a plurality of CPUs, a case arises in which a plurality of store accesses are requested by the CPUs. These must be observed in accordance with an execution order from the CPUs when the CPUs perform processes using a common MSU area.

In this case, when a certain process of several instructions or an interruption is conducted, a particular CPU must observe that another CPU completes its store access to the MSU before its following MSU fetch access. The process for ensuring that this sequence is followed is called serialization.

The serialization process is conducted as follows:
1. A first operation is conducted during the period from when a particular CPU transmits the serialization request after a store pending signal becomes 0 (non-asserted) to when the MCU receives the serialization completion signal. This is the period during which the following fetch operation is stopped.
2. A second operation is conducted during the period from when the MCU receives the serialization request to when it completes distributing it to CPUs other than the particular CPU.
3. A third operation is conducted during a period until an invalidation of a cache is completed by a store previously executed by the CPU from when the other CPUs receive the serialization request. This is the period during which following MSU accesses are stopped.

It is desirable for the CPUs' parallel processing ability to be increased so that the serializing process for main storage accesses by a plurality of CPUs is executed at high speed.

Figure 1C shows a structure of an information processing system of a type to which the present invention is directed.

In Figure 1C, N+1 CPUs 1-0, 1-1... and 1-N (N is an integer larger than 1) operate in parallel. Memory control apparatus (MCU) 2 processes access requests from all the CPUs, and a main storage unit (MSU) 3 is common to the system. Caches 4-0 to 4-N, each comprising a high-speed small-capacity buffer, are provided in respective CPUs and constitute a hierarchical memory architecture together with the MSU. Instruction control units 5-0 to 5-N are provided for respective CPUs and perform an execution instruction control using a pipeline.

A store-in function and a store-through function exist for controlling these caches. Store-in means that STORE is reflected only on a cache upon an execution of a store, and a group of data to be stored is reflected on (i.e. transmitted to) the MSU when the serialization is conducted or when the STORE of the particular CPU is reflected on the caches of all the other CPUs. Store-through is a method for always transmitting the data to the MSU every time STORE is performed.

The serialization process differs greatly depending on whether the cache control method is a store-in or a store-through. Examples of both cases are described as follows.

For a store-in, the store in which the control is classified depends on whether the area is private or public. In a public area, the contents of the cache are transmitted to the main storage unit MSU upon serialization. When the caching operation is invalidated, the next access to the main storage is performed so that the most recent data is obtained from the MSU thereby ensuring that the serialization operation is executed.

For a store-through, the data to be stored by a CPU is generally transmitted to the MSU and the data in the other CPU caches is invalidated if the data of the store area is maintained in caches of other CPUs. This process of data transmission and cache invalidation is referred to as a "reflection process" below. For a CPU which performs the serialization, the following MSU access (main storage access) is delayed until the reflection process on other CPUs is completed. Two serialization methods are available, based on the time relationship between a MSU access of the operation accompanied by the serialization and a MSU access of the serialization object.

The first is a pre-serialization method. This method ensures that a MSU access in an operation accompanied by a serialization is conducted after a pending MSU access is completed. The other is a post-serialization method. This method ensures that a MSU access which follows an operation accompanied by the serialization is conducted after the operation is completed.

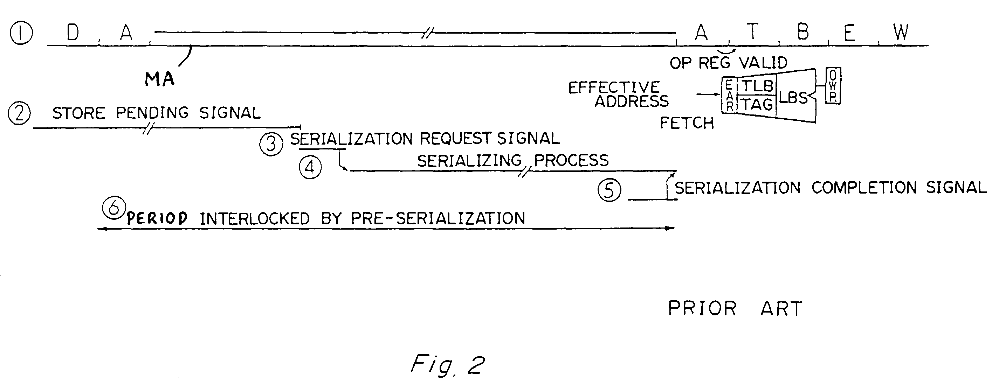

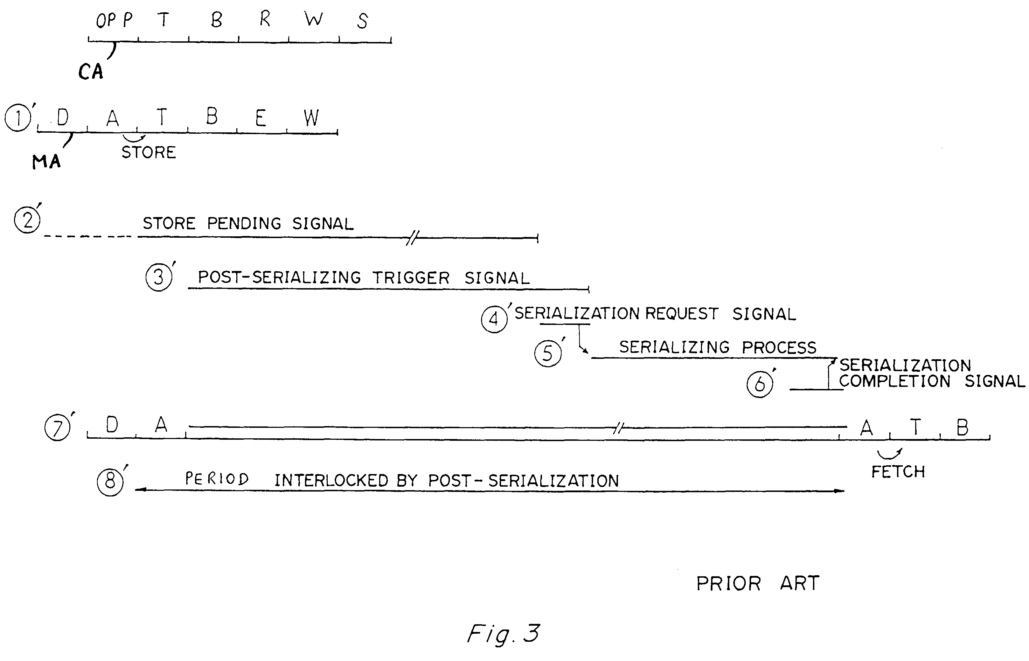

Figure 2 shows a timing chart of a pre-serialization operation in the system of Figure 1C, and Figure 3 shows a timing chart of a post-serialization operation in the same system, according to the prior art.

Referring to Figure 2,
1) shows an execution flow in pipeline operations, i.e. in a main storage access pipeline MA and a cache access pipeline CA of an instruction accompanied by a serialization. D represents an instruction decode cycle, A represents a cycle for calculation of an effective address for the operand, T represents a cycle of an address translation conducted by accesses to a TLB and TAG, and detection of the existence of data in the buffer by accesses to a TAG. B is a buffer 0 (cache) access cycle, E is an execution cycle, and W is a writing cycle of the result. OPP is an operand request priority cycle conducted by operand request valid signal OP REQ VAL, and R is a reading cycle conducted by an operand status valid signal OP STV.
2) is a store pending signal transmitted to a CPU when the MCU is processing the store request preceding the instruction to be serialized. The store pending signal is on until a STORE operation is entered into a pipe-line operation of the MCU after an A-cycle starts, as shown in Figures 1A and 2.
3) is a serialization request signal, transmitted after a store pending signal is turned off, for the CPU needing the serialization.
4) is a period of serialization processing in which the MCU informs the other CPUs of the serialization request, and the result of the preceding store of the CPU is reflected on the caches in the other CPUs (i.e. the caches are invalidated). The other CPUs stop access to the main storage in this period.
5) shows a serialization completion signal transmitted from the MCU to the CPU performing the serialization after the serialization process 4) is completed. The CPU completes the serialization process when it receives this signal.
6) is an interlock period, in which the instruction execution of 1) is delayed by the serialization operation. The fetch operation of the operand using the address generated during the A-cycle is kept waiting for this interlock, and is carried out through the cache LBS during B-cycle when the interlock is released upon completion of the serialization.

Next, a prior art post-serialization method is explained by referring to Figure 3.
1)' shows an execution flow in pipelines MA and CA of an instruction having a store request in the CPU. S represents a store cycle for storing data in the cache followed by a memory control unit request signal MCU REQ.
2)' is a store pending signal transmitted to the CPU by an execution of a preceding store request. The store operation has not been invoked in a MCU pipeline and is not guaranteed to be transacted in the order of other requests from the CPU.
3)' is a post-serialization trigger signal produced in the CPU in a B-cycle. This signal is turned on in order to perform the serialization process independently from the flow requesting the serialization process.
4)' is a serialization request signal transmitted from CPU to MCU as a result of 3)' , when the store pending signal of 2)' is turned off.
5)' is a period of serializing processing in which, after the CPU transmits a serialization request signal 4)' to the MCU, the MCU informs the other CPUs of this signal. The result of the store from the present CPU is reflected in a cache for other CPUs (i.e. the caches of other CPUs are invalidated). In this period, other CPUs stop performing a main storage access, from when the serialization signal is received to when the request for invalidating the cache, which is received previously, is completed.
6)' is a serializing completion signal transmitted from the MCU to the CPU performing the serialization, when a reflection process on the caches of other CPUs is completed. The serialization completion signal is turned on when the serialization request signal is transmitted to all the CPUs in a system. Namely, when it is guaranteed that, after the request for invalidating the caches due to the previous store is completed in all other CPUs except for the particular CPU, the following memory access is executed by respective CPUs.
7)' is an execution instruction sequence to be executed after a store instruction ST of 1)'. A fetch conducted by using an address generated at the A-cycle of 7)' is interlocked by generation of post-serializing trigger 3)' and is kept waiting until completion of the serializing process of 5)'.
8)' is an interlock period of 7)'.

An operation of the prior art shown in Figures 2 and 3 is explained by referring to the structure shown in Figure 1C.

Any one of instruction control units 5-0 to 5-N of respective CPUs 1-0 to 1-N may perform a store operation accompanied by an instruction execution. The serialization request signal is transmitted to the memory control unit MCU after reaching a cycle in which an interface between the corresponding caches 4-0 to 4-N and the memory control unit MCU is not affected, that is, in which the store pending signal is turned off. Thereafter, the main storage access is stopped until the serialization request signal reaches other CPUs.

The MCU sequentially processes serialization request signals in order of receipt, in a similar manner to the store request, and thereafter transmits them to other CPUs. As a result the other CPUs stop their MSU accesses until the previously received cache invalidation request is completed.

That is, when the serialization request signal transmitted after the store pending signal is turned off reaches the other CPUs from the MCU, serialization is ensured so that the previously conducted store is reflected in all the caches of the other CPUs. In an information processing system having a plurality of CPUs with individual caches and a common MSU, there is a problem that a main storage access following the serialization process is kept waiting, without any condition, until the store-reflection process or cache invalidation process at the time of the serialization is completed, regardless of whether the cache is controlled by the store-in or store-through method. Thus, the parallel processing capability of the CPUs is decreased.

WO 89/10592 by Unisys Corporation constitutes prior art for the present application under Article 54(3) EPC with respect to the designated States DE, FR and GB. It discloses a storage locking address-based priority facility in a multi-CPU information processing system having a shared main storage. Each CPU has a cache which communicates directly with the shared storage.

US-A-4 734 398 by Cray Reseach, Inc. discloses a serialization control means according to the preamble of accompanying claim 1, as well as a corresponding serialization control method.

According to a first aspect of the present invention as claimed in claim 1, there is provided serialization control means for use in a central processing unit CPU of a multi-CPU information processing system, for use in controlling access of the CPU to a common main storage unit MSU of the system, the system also having a common memory control unit MCU connected to all the CPUs, and each CPU having a high-speed, small-capacity cache forming a hierarchical memory structure with the MSU, said serialization control means in each CPU being arranged to issue a notification signal to the other CPUs of the occurrence of a serialization in its own CPU and to receive notification signals from the other CPUs;
characterised in that said serialization control means is arranged to issue said notification signals before its own CPU requests the MCU to serialize MSU accesses, and to allow its own CPU to immediately perform a MSU access which follows the occurrence of said serialization, without waiting for completion of said serialization, if no notification signal is received from the other CPUs within a predetermined period.

According to a second aspect of the present invention as claimed in claim 8, there is provided a serialization control method for use with a central processing unit CPU of a multi-CPU information processing system to control access of the CPU to a common main storage unit MSU of the system, the system also having a common memory control unit MCU, the method comprising steps of:
a) detecting an occurrence of a serialization in the CPU;
b) issuing a notification of the occurrence of the serialization to the other CPUs of the system, before the CPU requests the MCU to serialize MSU accesses;
c) examining whether the CPU has received a notification of an occurrence of a serialization from any of the other CPUs;
d) delaying a following MSU access by the CPU, following the occurrence of the serialization in the CPU, if such a notification has been received; and
e) immediately executing said following MSU access without waiting for completion of the serialization requested by the CPU, when no notification in step (c) has been received within a predetermined period or when any serialization requested by the other CPUs has been completed.

An embodiment of the present invention can perform a MSU access without delay following a serialization process and increase the parallel processing capability of a plurality of CPUs.

The present invention is based on the observation that serialization between a plurality of CPUs having a common MSU is meaningful when the order of the MSU accesses can be observed mutually by respective CPUs. That is, serialization processing of a particular CPU has to be observed by other CPUs only when MSU access is performed for an area associated with MSU accesses the sequence of which is guaranteed.

Therefore, the case where it is necessary to keep the MSU access waiting until after the serialization process is completed, is distinguished from the case where it is not. When it is not necessary to delay the MSU access, the following MSU access is executed immediately. In particular, upon storing, when a particular CPU transmits a serialization notification to all other CPUs and does not receive a prior serialization notification from any of the other CPUs (after allowing time for its own notification to reach them), the MSU access is instantly executed. However, when the particular CPU receives a prior serialization notification from the other CPUs, the MSU access is kept waiting.

Reference is made, by way of example, to the accompanying drawings in which:
Figures 1A and 1B show a STORE operation flow and a FETCH operation flow respectively, in an information processing system;
Figure 1C shows the structure of the information processing system to which the present invention can be applied;
Figure 2 is a timing chart of pre-serialization control in the prior art;
Figure 3 is a timing chart of post-serialization control in the prior art;
Figure 4 shows the principle of operation of the present invention;
Figure 5 shows data and signal flows in an example of operation according to the present invention;
Figure 6 shows the structure of a system control interface in an embodiment of the present invention;
Figure 7 shows the detailed structure of a serialization notification control circuit in Figure 6;
Figure 8 shows a detailed circuit of a distribution circuit of Figure 6;
Figure 9 is a timing chart of pre-serialization control using the present invention;
Figure 10 is a timing chart of post-serialization control using the present invention;
Figure 11 shows a timing relationship of serialization notification signals produced by three CPUs; and
Figure 12 is a timing chart showing overlapping interlocks obtained by using the invention.

The situation addressed by the present invention will be explained by referring to an example of an information processing system comprising two CPUs, CPU-0 and CPU-1.

Consider the following sequence of operation:
a) CPU-0 stores (ST) data in areas A and B, and CPU-1 subsequently fetches (Fch) data sequentially from areas B and A. In this case the instruction sequence is presented as follows.

| (CPU-0) | (CPU-1) |
|---|---|
| ST A | |
| ST B | |
| | Fch B |
| | Fch A |

If the result of the store by CPU-0 is observed by CPU-1 when CPU-1 fetches area B (i.e. is reflected on the result fetched by CPU-1) the result of the previous store by CPU-0 should also be observed when CPU-1 fetches area A. This is based on an assurance of the order of stores conducted by CPU-0.
b) When CPU-0 stores data in area A (ST), serialization is conducted and thereafter CPU-0 fetches (Fch) area B. Then, CPU-1 stores (ST) data in area B and a serialization is conducted, and CPU-1 fetches (Fch) data from area A.
In this case, the instruction sequence is shown as follows.

| (CPU-0) | (CPU-1) |
|---|---|
| ST A | |
| Serialize | |
| Fch B | |
| | ST B |
| | Serialize |
| | Fch A |

The result stored in area B by CPU-1 is not reflected on (i.e. taken into account or "observed" in) the result fetched from area B (Fch B) by CPU-0. Namely, when a fetch of B by CPU-0 precedes the next store of B by CPU-1, STORE in area A (ST A) of CPU-0 is completed before FETCH B and thus, STORE A by CPU-0 (ST A) is executed before STORE B by CPU-1 (ST B), and always before FETCH A (Fch A) by CPU-1.

Therefore, the result stored in area A by CPU-0 (ST A) must be reflected on a result fetched from area A (Fch A) by CPU-1. This is based on assurances of the order of a store and a fetch by the serialization processes of CPU-0 and CPU-1. On the other hand, if CPU-1 does not perform a serialization, it is not guaranteed that STORE in area B is executed prior to FETCH from area A, and, thus, even if the result stored in area B by CPU-1 is not reflected on the result fetched from area B by CPU-0, it is not always true that the result of STORE A by CPU-0 is always observed (or reflected) on FETCH A by CPU-1.

In these two examples, the STORE A operation by CPU-0 and FETCH A operation by CPU-1 in case a) can be easily realized by sequentially performing a store process to the MSU upon STORE by CPU-0, and sequentially performing a serialization process to invalidate the caches of other CPUs, which have the same data storing area. Even if the data of area A exists in a cache in CPU-1, the result of STORE A by CPU-0 is reflected on the cache by processing a cache invalidation request caused by STORE A operation. The delay to MSU access after the serialization process caused by the above process arises from the time period required to transmit the data from MSU to cache when an access is made to an invalidated area in the cache.

However, to ensure the sequence of CPUs in the above example b), it is necessary to delay a fetch after a serialization process until the store before the serialization process is reflected on the MSU and the corresponding areas of the caches of other CPUs are invalidated, therefore requiring special control.

In example b), the sequence of both CPUs must be ensured only when both CPUs perform a serialization process and when the execution sequence concerned consists of a store and a fetch for both CPUs, a serialization being interposed between the store and the fetch in a particular CPU. The execution sequence between the two CPUs is not restricted.

If CPU-1 recognizes that CPU-0 performs a serialization operation before CPU-1 does so, it is pointless to keep a fetch (Fch B) waiting after the serialization operation in CPU-0 until the store (ST A) performed before the serialization is reflected on the CPU-1 cache. Rather, CPU-1 only needs to wait for the store (ST A), conducted before CPU-0 performs a serialization operation, to be reflected in the result of the fetch (Fch A) after the serialization of CPU-1.

In the present invention, when serialization is to be performed by a particular one of the CPUs, this is notified to the other CPU (in general, to a plurality of other CPUs) before a serialization request is transmitted to the MCU. Further, only when a serialization notification is received from the other CPUs before the serialization notification by the particular CPU reaches the other CPUs, the first CPU's MSU access after serialization is delayed, until the result of the store conducted by the other CPU is reflected on the cache of the first CPU. When no notification from the other CPUs is received, however, the following MSU access is performed immediately after the serialization notification by the particular CPU reaches the other CPUs.

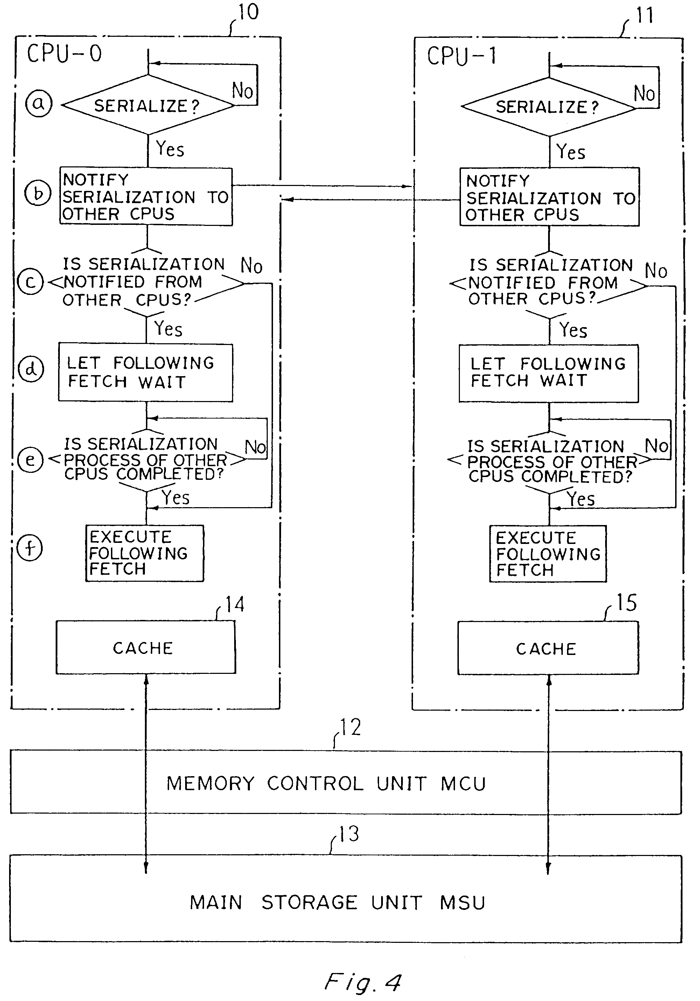

Figure 4 explains the principle of the present invention.

As shown, the present invention can be used with a CPU-0 10, CPU-1 11, memory control unit (MCU) 12, MSU 13 and caches 14 and 15 provided within CPU-0 and CPU-1. A serialization control method embodying the invention is shown as a flowchart within respective blocks of CPU-0 and CPU-1.

For simplicity, only two CPUs are shown in Figure 4, but more may be present. In this case, it is assumed that all the CPUs have the same functions regarding sequential control. The method of the invention comprises the following steps:
a) Respective CPUs execute respective instruction sequences and detect the condition that serialization is needed.
b) When a particular CPU needs to make a serialization request in step a), this is notified to the other CPUs.
c) After step b), it is determined whether or not any notification of serialization from other CPUs exists, and d) or f) is next executed based on the result of this determination.
d) If serialization from another CPU is detected in step c), execution of the following fetch to be serialized in the particular CPU is delayed.
e) This step is delayed until the result of a store conducted by the other CPU, responsible for the serialization notification detected by c), is reflected on the cache of the particular CPU, i.e., the invalidation of the cache is completed when the serialization process is completed.
f) When no serialization notification from another CPU is found in step c), or when a completion of the serialization process is detected in step e), the following fetch (MSU access) is executed.

An example of the method embodying the present invention will now be explained.

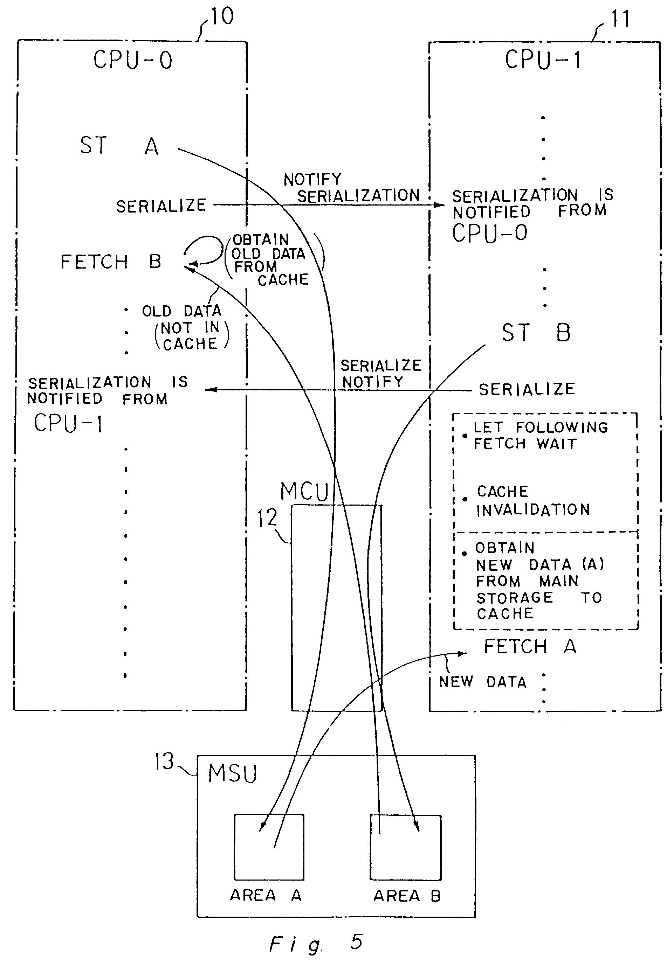

Figure 5 explains the serialization control operation when CPU-0 and CPU-1 execute an instruction sequence including serialization.

First, CPU-0 transmits a store request (ST A) to the area A and sequentially initiates the serialization (Serialize).

In the serialization control, the serialization notification from CPU-0 is transmitted to CPU-1 and confirmed by CPU-1. Then, as CPU-0 does not receive a notification from CPU-1, the fetch (Fch B) from area B is executed without waiting for the completion of the store request (ST A) in area A. The fetch is instantaneously conducted from the cache when data exists in it.

On the other hand, CPU-1 receives the serialization notification from CPU-0. Thereafter, CPU-1 transmits a store request (ST B) in area B and then activates the serialization. In the serialization control, serialization notification is transmitted to CPU-0, and CPU-1 recognizes the notification previously received from CPU-0. The following fetch (Fch A) from area A is interlocked and execution of the fetch is made to wait.

CPU-1 waits for a completion of cache invalidation based on the store request (ST A) of CPU-0 and when this invalidation is completed, the new data of area A is sent to the cache from the MSU and fetch request (Fch A) is executed.

As described above, respective CPUs notify the serialization to other CPUs when it has been conducted. Thus, the CPU which performs the serialization controls whether or not the following fetch should be kept waiting, based on the existence or non-existence of a serialization notification from other CPUs.

In contrast, in the prior art, FETCH B by CPU-0 is always kept waiting until the invalidation of the cache in CPU-1 required by STORE A upon the serialization by CPU-0 is completed.

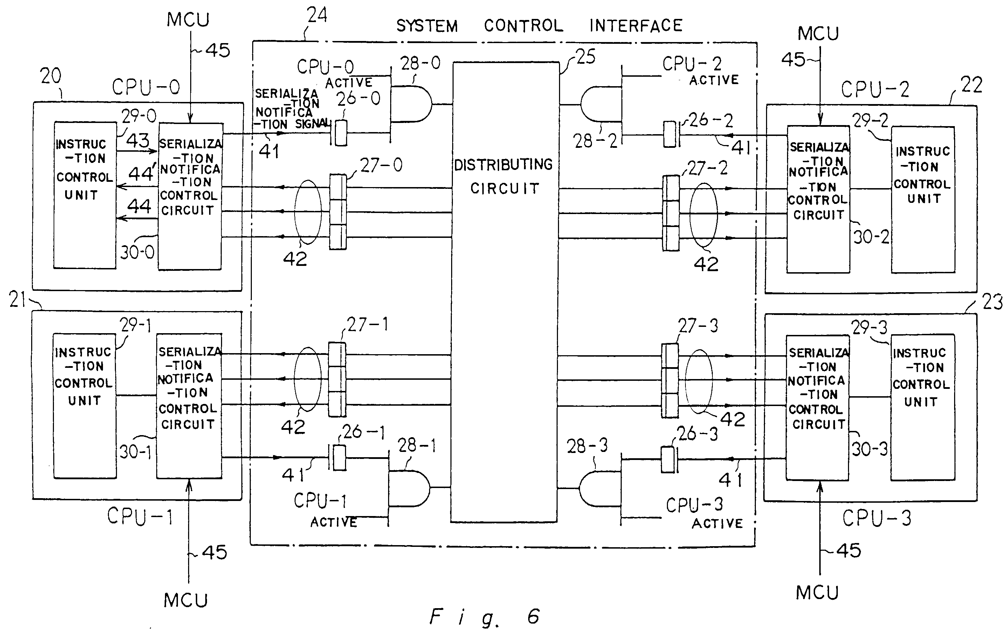

Figure 6 shows a structure of a system control interface in a system to which the present invention can be applied. The system comprises CPU-0 20, CPU-1 21, CPU-2 22, CPU-3 23, system control interface 24, a distributing circuit 25 for distributing a serialization notification signal transmitted from one CPU to other CPUs, input ports 26-0 to 26-3 for receiving a serialization notification signal transmitted from CPU-0 to CPU-3, respectively, output ports 27-0 to 27-3 for outputting a serialization notification signal to CPU-0 to CPU-3, respectively, and AND circuits 28-0 to 28-3 connecting respective input ports 26-0 to 26-3 to distributing circuit 25 only when an input CPU-0 ACTIVE to CPU-3 ACTIVE is logic "1". Each CPU has a instruction control unit (ICU), 29-0 to 29-3, and a serialization notification control circuit (serialization control means) 30-0 to 30-3 provided in the present invention.

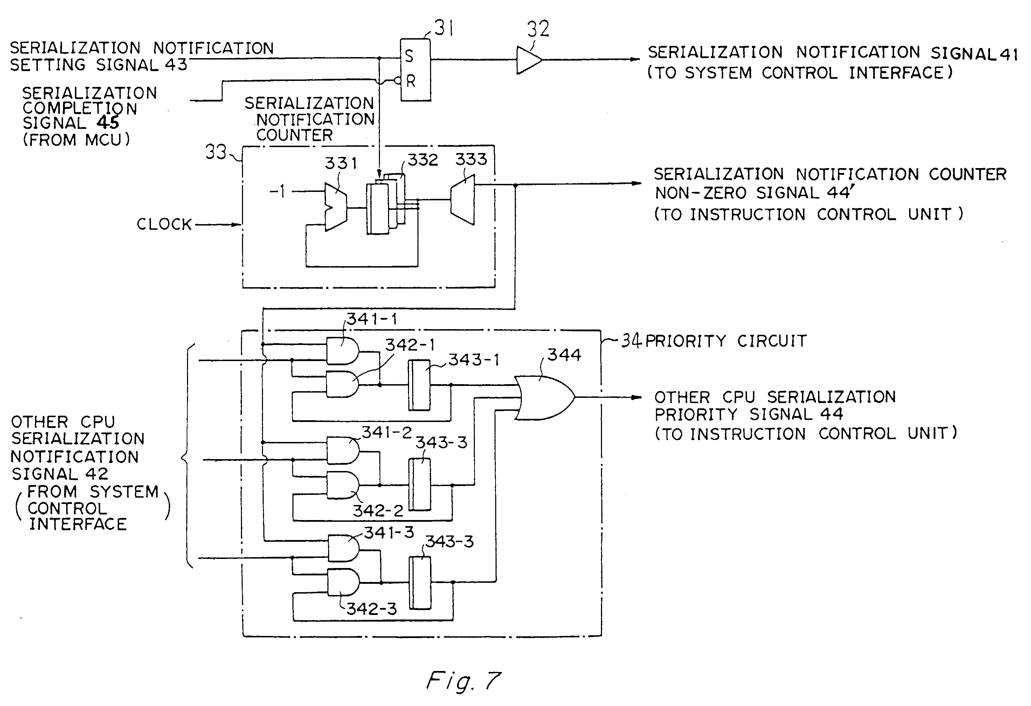

When an ICU 29-0 to 29-3 in one of the CPUs 20 to 23 recognizes a necessity for serialization based on an instruction or interruption, the respective control circuit 30-0 to 30-3 turns the serialization notification signal 41 ON. When this occurs after execution of the store, the following fetch is executed instantaneously if the CPU has not previously received a serialization notification signal 42 from the other CPUs, and the fetch is made to wait if the CPU does receive a signal 42. More precisely, during a period determined by serialization notification counter 33 (shown in Figure 7), the fetch is delayed while the control circuit determines whether a signal 42 is received from any of the other CPUs. If a signal 42 is received in this period, it is held, thereby delaying the fetch until the signal 41 from the CPU falls (ends).

Signals 41 from respective CPUs are inputted to input ports 26-0 to 26-3 of system control interface 24, then inputted to distributing circuit 25 through AND circuits 28-0 to 28-3 and finally distributed, as signals 42, to other CPUs through output ports 27-0 to 27-3.

Figure 7 shows in detail the structure of the control circuit provided within each CPU in Figure 6, with reference to CPU-0 as an example.

The control circuit comprises latch 31 for setting signal 41, buffer gate 32, counter 33 for counting a delay period corresponding to the time needed for transmission of signal 41 to other CPUs through system control interface 24 of Figure 6, and priority circuit 34 for detecting which is earlier, transmission of the signal 41 by CPU-0 or arrival of a signal 42 from another CPU. The output of priority circuit 34 is transmitted to the ICU (e.g. 29-0) which makes the following fetch wait by providing a waiting signal.

Latch 31 is set by setting signal 43 from the ICU and is reset by completion signal 45 from the MCU. Serialization notification signal 41 outputted from latch 31 is transmitted to system control interface 24 of Figure 6 through buffer gate 32 so that it is distributed to the other CPUs.

Counter 33 comprises subtracter 331 receiving a "-1" signal at every input clock, registers 332 connected to the subtracter 331 and decoder 333 connected to the register 332 for outputting a serialization notification counter non-zero signal 44' of the counter 33. The decoder 333 operates as an OR circuit and sets an initial value by using setting signal 43.

The initial value of the counter 33 corresponds to a propagation time from CPU-0 to the other CPUs, and it counts down in accordance with the clock. Signal 44' is ON until counter 33 reaches "0", when it is turned OFF. Signal 44' is transmitted to the ICU to perform an interlocking control, and provides priority circuit 34 with an enabling signal for examining receipt of any signal 42 from other CPUs.

Priority circuit 34 comprises a first AND gate 341-1 having an input connected to the output of counter 33 and another input connected to system control interface 24 to receive a signal 42 from, e.g., CPU-1, and a second AND gate 342-1 having an input connected to receive the same signal. It also includes flip-flop 343-1 having an input connected to the output of first and second AND gates 341-1 and 342-1 and an output connected to another input of second AND gate 342-1 and also connected to OR gate 344. AND gates 341-2 and 342-2, flip-flop 343-2, AND gates 341-3 and 342-3 and flip-flop 343-3 are similarly connected.

Priority circuit 34 outputs an "other-CPU serialization priority signal" 44 to the respective ICU. The ICU applies setting signal 43 to latch 31 to provide the signal 41 to system control interface 24, and also applies it to counter 33. The counter 33 outputs the non-zero signal 44' to lock CPU-0 to prevent MSU access thereby.

When counter 33 outputs a '1', a received signal 42 may be already '1'. This means that a serialization notification from CPU-1, CPU-2 or CPU-3 has been issued before that of CPU-0. In this case, AND gate 341-1 produces a '1' output and thus OR gate 344 produces the priority signal 44 as '1' to lock the CPU. After counter 33 finishes counting, thereby outputting '0', flip-flop 343-1 maintains '1' output even though the output of AND gate 341-1 is turned to '0'.

If all signals 42 become '0', then the priority signal 44 outputted from priority circuit 34 becomes '0', thereby releasing CPU-0 so it can access the MSU.

If the output of counter 33 become '0' before arrival of a signal 42 at the input of priority circuit 34, the output of each AND gate 341-1 to 341-3 is made '0', thereby outputting '0' signal (i.e. signal 44 is inactive). This means that the serialization notification by CPU-0 is earlier than one by CPU-1, CPU-2 or CPU-3, thereby preventing a locking of CPU-0. When completion signal 45 is applied to latch 31 from the MCU, signal 41 becomes '0'. When CPU-0 does not produce the setting signal 43, the output of counter 33 is kept '0'. Therefore, the output of priority circuit 34 is also kept '0' to prevent a locking of CPU-0.

In this case, even if a signal 42 is received from another CPU, the outputs of the AND gates 341-0 to 341-3 are kept '0', so signal 42 is disregarded by CPU-0. The above operations of counter 33 and priority circuit 34 correspond to the flowchart shown in Figure 4 and operational explanation shown in Figure 5.

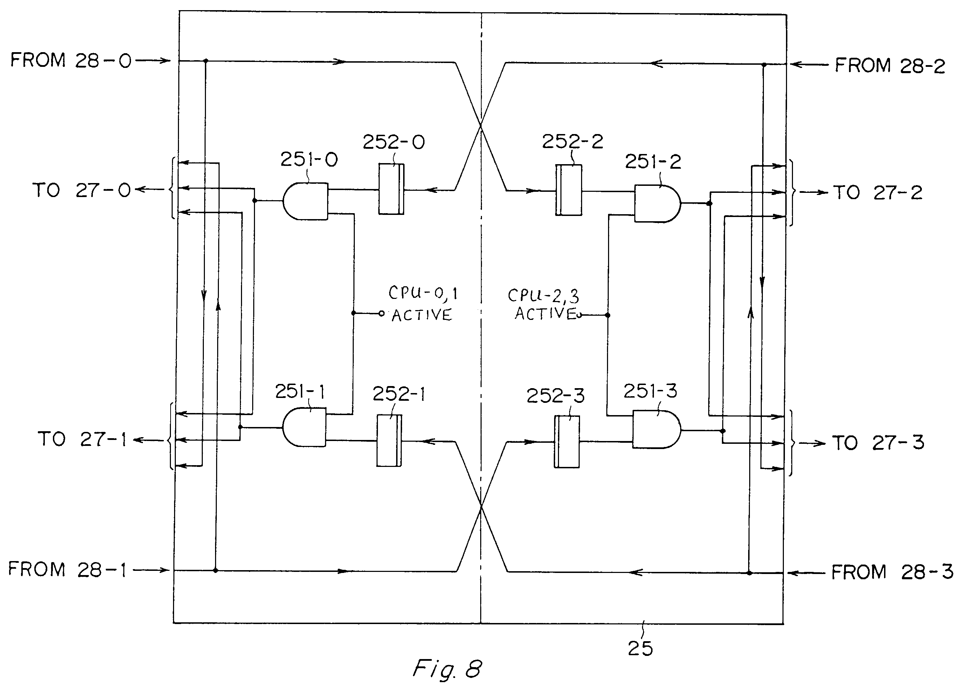

Figure 8 shows a detailed structure of distribution circuit 25 of Figure 6. Distribution circuit 25 comprises four AND gates 251-0, 251-1, 251-2, and 251-3, and four flip-flops 252-0, 252-1, 252-2, and 252-3. AND gate 28-0 corresponding to CPU-0 applies signals to distribution circuit 25. A signal from AND gate 28-0 is transmitted to the register 27-2 corresponding to CPU-2 through flip-flop 252-2 and AND gate 251-2, transmitted to register 27-3 corresponding to CPU-3 through flip-flop 252-2 and AND gate 251-2, and transmitted directly to register 27-1 corresponding to CPU-1. The signal from AND gate 28-0 is accordingly distributed to CPU-2, CPU-3 and CPU-1, and the signals from AND gates 28-1 to 28-3 are distributed likewise. A signal CPU-0, 1 ACTIVE is applied to AND gates 251-0 and 251-1, and a signal CPU-2, 3 ACTIVE is applied to AND gates 251-2 and 251-3.

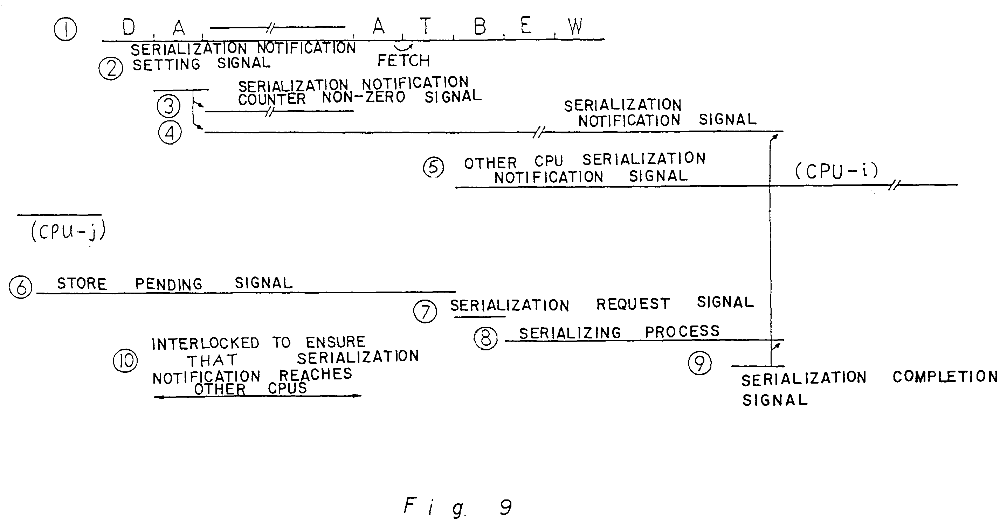

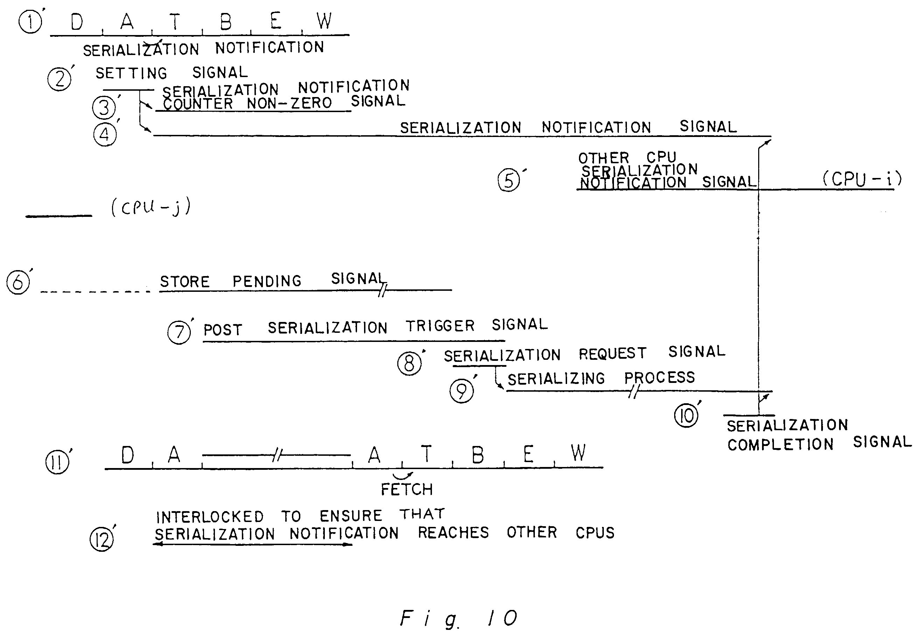

Figures 9 and 10 show timing charts corresponding to Figures 2 and 3. The basic control flow in the present invention and in the prior art is the same.

The pre-serialization method shown in Figure 9 will now be explained by referring to the above embodiment.
1) shows a flow of instructions to be serialized including a MSU access.
2) is the serialization notification setting signal 43 produced in an A-cycle of 1), indicating that serialization is required, and thereby setting the serialization notification signal 41.
3) is the counter non-zero signal 44' from counter 33 which is activated by the setting signal in 2).
4) is the signal 41 output by the latch.
5) is a serialization notification signal 42 from one of the other CPUs (here denoted CPU-i, CPU-j).
6) is a store pending signal.
7) is a serialization request signal transmitted from CPU to MCU.
8) is a period of the serialization process for invalidating the cache, i.e. the reflection process of the result of the preceding store on other CPUs.
9) is the serialization completion signal 45 transmitted from the MCU to respective CPUs upon completion of a serialization process by the MCU, namely, when the serialization request reaches all the CPUs other than the particular CPU.
10) is an interlocking period for allowing signal 41 from the particular CPU to reach the other CPUs, and a period for checking receipt of any signal 42 from the other CPUs.

The post-serialization method shown in Figure 10 will now explained.
1)' shows the execution flow of an instruction which accompanies serialization.
2)' is a setting signal 43 produced at the A-cycle of 1)', indicating that serialization is required, thereby setting signal 41.
3)' is the counter non-zero signal 44'.
4)' is the signal 41 as output by the latch.
5)' is a notification signal 42 from another CPU.
6)' is a store pending signal.
7)' is a post serialized trigger signal requesting serialization with regard to the following main storage (MSU) access.
8)' is the serialization request signal transmitted from the particular CPU to the MCU.
9)' is a period of a serialization process for reflecting the result of the store on other CPUs, namely, the period from when the MCU receives the serialization request to when the MCU completes distributing the serialization request to the other CPUs in the system.
10)' is the signal 45 transmitted from MCU to respective CPUs.
11)' is an execution sequence of the following instruction accompanied by a fetch in the CPU.
12)' is an interlocking period for ensuring that serialization notification reaches other CPUs.

The whole operation of the circuits in Figure 6 to 8 will now be explained by referring to Figure 9 and 10, and using CPU-0 as an example.

As shown, setting signal 43 is turned ON at an A-cycle of a flow of instructions to perform a serialization, and then signal 41 is turned ON to start the serialization. Counter 33 starts counting for a time required for signal 41 to reach another CPU through system control interface 24.

Until the count is over, CPU-0 is interlocked at A-cycle of the flow 1 in the pre-serializing method shown in Figure 9, and it is interlocked at A-cycle of the flow 11)' including the following MSU access in the post-serializing method shown in Figure 10 (normally, these flows are the same). Thus, the MSU access request is delayed.

Before counter 33 stops, namely, before signal 44' becomes 0, priority circuit 34 examines whether or not any serialization notification has been received from another CPU. If not, it judges that only CPU-0 requests serialization, or that CPU-0 was the first to request it (i.e. has priority). After the counter 33 stops, any further serialization notification (signal 42) is disregarded by priority circuit 34. This is because, in this case, the signal 41 from CPU-0 is considered to have reached the other CPUs first.

If, before counter 33 stops, a signal 42 is received from another CPU, the interlock continues at the A-cycle until signal 42 is turned OFF. This is controlled by the other CPU serialization priority signal 44 outputted from priority circuit 34. Regardless of the existence of interlock at the A-cycle by serialization notification from the other CPU, the serialization request is conducted in the same sequence as in the prior art, as shown in Figures 2 and 3. When the resulting serialization process is completed and the notification signal is turned OFF, the store prior to the serialization by CPU-0 is reflected on all the other CPUs.

In the prior art, a subsequent MSU access is kept waiting until completion of the serialization process, by which it is ensured that all the stores prior to serialization of CPU-0 are reflected on other CPUs upon serialization, namely, during the period from when other CPUs receive the serialization request to when the request for the cache invalidation by the store of CPU-0 is processed (completed).

In contrast, in the present invention, the serialization notification is transmitted to the other CPUs before an actual serialization request. Therefore, it is sufficient that the interlock is applied for a short period corresponding to the transmission time.

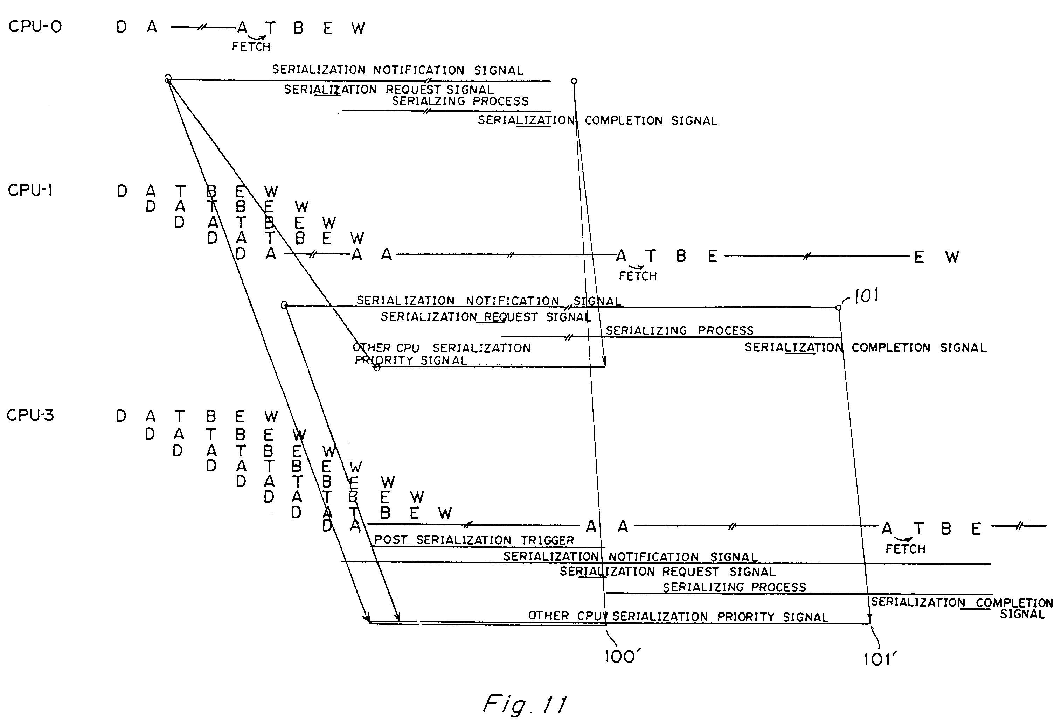

Figure 11 shows the relationship between signals occurring in CPU-0, CPU-1 and CPU-3 as an example. Repeated flows of DATBEW represent normal flows in which no serialization occurs. Regarding CPU-3, the serialization notification signal is turned on in an A-cycle and then the post-serialization trigger signal rises (is asserted) after a delay of one cycle. Then the process enters into a store pending state as the A-cycle is extended. When the serialization request signal is outputted around the end of the post-serialization trigger, the serializing process starts. The post-serialization method executes the fetch following an operation accompanied with a serialization after the operation is completed and thus the fetch is kept waiting at the A-cycle.

When the serialization notification signal rises, the counter 33 starts a count down, during which CPU-3 is locked to prevent MSU access. At this time CPU-0 has already issued a serialization request, so in CPU-3's priority circuit, the resulting signal 42 from CPU-0 sets a flip-flop 343 (i.e. produces a "1" signal). Also, the serialization notification signal from CPU-1 rises at an earlier time than the serialization from CPU-3, so another flip-flop in CPU-3's priority circuit is also set.

Therefore, as the output of at least one flip-flop is '1', the priority signal 44 becomes '1'. During this period, CPU-3 cannot perform the following fetch operation. The serialization process of CPU-0 is completed at time 100; then the notification signal from CPU-0 becomes non-asserted and the output of the corresponding flip-flop becomes '0'. At this time, as the serialization process of CPU-1 has not been completed, CPU-3 is kept locked.

The serialization process of CPU-1 is completed at a time 101, and is notified to CPU-3 at a time 101', by completion signal 45 from the MCU. This cancels the notification signal from CPU-1, so all the flip-flop outputs become 0, thereby releasing the locked state. Therefore, CPU-3 is capable of performing a fetch in the following A-cycle.

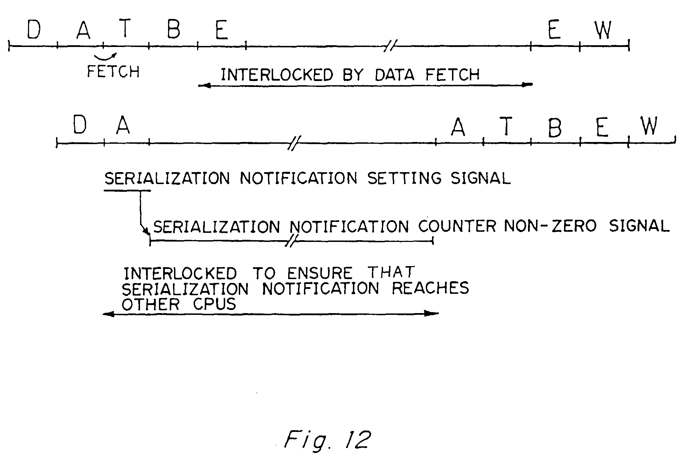

The interlocking period corresponding to the transmission time of the serialization notification may be fixed and is not affected by other interlocking factors. Therefore, where inevitable interlocking factors exist, the interlocking period by serialization is often not observed because such interlocking factors overlap. For example, as shown in Figure 12, where the interlock accompanied by a fetch Fch is generated in the flow of a preceding instruction, the CPU is interlocked at E-cycle, and this interlock period terminates later than an interlock at A-cycle in the flow of the serialization. A serialization notification reaches the other CPUs when the interlocking period at the A-cycle terminates. Therefore, the interlock by serialization notification does not cause any loss.

According to the present invention, when a particular CPU conducts a serialization, it is examined whether or not serializations from other CPUs have preceded it. When they have not, the following MSU access is enabled immediately after waiting for a time needed for the particular CPUs serialization notification to reach the other CPUs, thereby decreasing the waiting time accompanying the serialization operation and greatly increasing the processing ability of the CPUs.

## Claims

1. Serialization control means for use in a central processing unit CPU of a multi-CPU information processing system, for use in controlling access of the CPU to a common main storage unit MSU of the system, the system also having a common memory control unit MCU connected to all the CPUs, and each CPU having a high-speed, small-capacity cache forming a hierarchical memory structure with the MSU;
said serialization control means in each CPU being arranged to issue a notification signal (41) to the other CPUs of the occurrence of a serialization in its own CPU and to receive notification signals (42) from the other CPUs;
characterised in that said serialization control means is arranged to issue said notification signal (41) before its own CPU requests the MCU to serialize MSU accesses, and to allow its own CPU to immediately perform a MSU access which follows the occurrence of said serialization, without waiting for completion of said serialization, if no notification signal is received from the other CPUs within a predetermined period.

2. Serialization control means according to claim 1, further arranged to delay said MSU access if any other-CPU notification signal (42) is received during said predetermined period, and to allow said MSU access to proceed when all other-CPU notification signals (42) become non-asserted.

3. Serialization control means according to claim 2, further arranged to allow said MSU access to proceed regardless of any other-CPU notification signal (42), when no own-CPU notification signal (41) is generated.

4. Serialization control means according to claim 2 or 3, comprising:
latch means (31) which outputs said own-CPU notification signal (41) notifying serialization to the other CPUs, in response to a setting signal (43) from the CPU and which is reset by a completion signal (45) from the MCU;
a counter (33) which counts a delay time during which the own-CPU notification signal (41) is to be transmitted;
a priority circuit (34) responsive to other-CPU notification signals (42) output by the other CPUs and to the output of the counter (33), for generating a priority signal (44) preventing the MSU access by its own CPU, when at least one other-CPU notification signal (42) is received during said predetermined period, said period being based on the time taken for the own-CPU notification signal (41) to reach the other CPUs, and for enabling said MSU access when the own-CPU notification signal (41) reaches the other CPUs prior to receipt of any other-CPU notification signal (42).

5. Serialization control means according to claim 4, wherein the counter (33) comprises a count-down means for counting down a value set by the setting signal (43), this value corresponding to a time taken for the own-CPU notification signal (41) to reach the other CPUs, and a decoder (333) for supplying a signal (44'), indicating a non-zero counted value, to an instruction control unit (29) of the CPU.

6. Serialization control means according to claim 4 or 5, wherein the priority circuit (34) comprises:
a plurality of groups each comprising:
a first AND gate (341-1,341-2,341-3) having a first input for receiving the output of said counter (33), and a second input for receiving a respective one of the other-CPU notification signals (42);
a second AND gate (342-1,342-2,342-3) having a first input for receiving a respective one of the other-CPU notification signals (42); and
a flip-flop (343-1,343-2,343-3) connected to the commonly-connected outputs of the AND gates and having an output connected to a second input of the second AND gate;
and wherein the priority circuit further comprises an OR gate (344) having a plurality of inputs, each respectively connected to the output of the flip-flop (343-1,343-2,343-3) of one of said groups, for producing said priority signal (44) when any of said flip-flops produces a logic "1" signal.

7. Serialization control means according to claim 4, 5, or 6, further comprising a distributing circuit (25) shared by all the CPUs, for distributing signals from each CPU to the other CPUs.

8. A serialization control method for use with a central processing unit CPU of a multi-CPU information processing system to control access of the CPU to a common main storage unit MSU of the system, the system also having a common memory control unit MCU, the method comprising steps of:
a) detecting an occurrence of a serialization in the CPU;
b) issuing a notification of the occurrence of the serialization to the other CPUs of the system, before the CPU requests the MCU to serialize MSU accesses;
c) examining whether the CPU has received a notification of an occurrence of a serialization from any of the other CPUs;
d) delaying a following MSU access by the CPU, following the occurrence of the serialization in the CPU, if such a notification has been received; and
e) immediately executing said following MSU access without waiting for completion of the serialization requested by the CPU, when no notification in step (c) has been received within a predetermined period or when any serialization requested by the other CPUs has been completed.

## Patentansprüche

1. Serienumsetzungs-Steuermittel zum Gebrauch in einer einer zentralen Verarbeitungseinheit CPU von einem Mehr-CPU-Informationsverarbeitungssystem zum Gebrauch bei der Steuerung des Zugriffs von der CPU auf eine gemeinsame Hauptspeichereinheit MSU von dem System, welches System auch eine gemeinsame Speichersteuereinheit MCU aufweist, die mit allen den CPU's verbunden ist, und jede CPU weist einen Hochgeschwindigkeits- und Niedrigkapazitäts-Cache-Speicher auf, der mit der MSU eine hierarchische Speicherstruktur bildet;
welches Serienumsetzungs-Steuermittel in jeder CPU angeordnet ist, um an die anderen CPU's ein Ankündigungssignal (41) von dem Auftreten von einer Serienumsetzung in seiner eigenen CPU auszugeben und um Ankündigungssignale (42) von den anderen CPU's zu empfangen;
dadurch gekennzeichnet, daß das Serienumsetzungs-Steuermittel angeordnet ist, um das Ankündigungssignal (41) auszugeben, bevor seine eigene CPU von der MCU fordert, MSU-Zugriffe serienumzusetzen, und um seiner eigenen CPU zu erlauben, unmittelbar einen MSU-Zugriff auszuführen, der dem Auftreten von der Serienumsetzung folgt, ohne auf den Abschluß von der Serienumsetzung zu warten, falls kein Ankündigungssignal von den anderen CPU's innerhalb eines vorbestimmten Zeitbereiches empfangen wird.

2. Serienumsetzungs-Steuermittel gemäß Anspruch 1, das ferner angeordnet ist, den MSU-Zugriff zu verzögern, falls irgendein Ankündigungssignal (42) einer anderen CPU während des vorbestimmten Zeitbereiches empfangen wird, und um dem MSU-Zugriff zu erlauben, verarbeitet zu werden, wenn alle Ankündigungssignale (42) von anderen CPU's nicht-durchgesetzt werden.

3. Serienumsetzungs-Steuermittel gemäß Anspruch 2, das ferner angeordnet ist, um dem MSU-Zugriff zu erlauben, ungeachtet von jedem Ankündigungssignal (41) einer anderen CPU verarbeitet zu werden, wenn kein Ankündigungssignal (41) der eigenen CPU erzeugt ist.

4. Serienumsetzungs-Steuermittel gemäß Anspruch 2 oder 3, das umfaßt:
ein Haltespeichermittel (31), das das Ankündigungssignal (41) der eigenen CPU, das die Serienumsetzung an die anderen CPU's ankündigt, in Reaktion auf ein Setzsignal (42) von der CPU ausgibt und das durch ein Abschlußsignal (45) von der MCU zurückgesetzt wird;
einen Zähler (33), der eine Verzögerungszeit zählt, während derer das Ankündigungssignal (41) der eigene CPU übertragen werden soll;
eine Prioritätsschaltung (34), die auf Ankündigungssignale (42) einer anderen CPU, die durch die anderen CPU's ausgegeben werden, und auf das Ausgangssignal von dem Zähler (33) anspricht, um ein Prioritätssignal (44) zu erzeugen, das den MSU-Zugriff durch die eigene CPU verhindert, wenn mindestens ein Ankündigungssignal (42) einer anderen CPU während des vorbestimmten Zeitbereiches empfangen wird, welcher Zeitbereich auf der Zeit basiert, die für das Ankündigungssignal (41) der eigenen CPU genommen wird, um die anderen CPU's zu erreichen, und um den MSU-Zugriff freizugeben, wenn das Ankündigungssignal (41) der eigenen CPU die anderen CPU's vor dem Empfang von jedem Ankündigungssignal (42) einer anderen CPU erreicht.

5. Serienumsetzungs-Steuermittel gemäß Anspruch 4, bei dem der Zähler (33) ein Abwärtszähl-Mittel zum Abwärtszählen eines Wertes, der durch das Setzsignal (42) gesetzt wird, welcher Wert einer Zeit entspricht, die von dem Ankündigungssignal (41) der eigenen CPU genommen wird, um die anderen CPU's zu erreichen, und einen Dekodierer (333) zur Lieferung eines Signals (44') umfaßt, das einen Nicht-Nullgezählten-Wert an eine Befehlssteuereinheit (29) von der CPU anzeigt.

6. Serienumsetzungs-Steuermittel gemäß Anspruch 4 oder 5, bei dem die Prioritätschaltung (34) umfaßt:
eine Vielzahl von Gruppen, die jeweils umfassen:
ein erstes UND-Tor (341-1, 341-2, 341-3), das einen ersten Eingang zum Empfangen des Ausgangssignals von dem Zähler (33) und einen zweiten Eingang zum Empfangen eines entsprechenden von den Ankündigungssignalen (42) einer anderen CPU umfaßt;
ein zweites UND-Tor (342-1, 342-2, 342-3), das einen ersten Eingang zum Empfangen eines entsprechenden von den Ankündigungssignalen (42) einer anderen CPU umfaßt;
und einen Flip-Flop (343-1, 343-2, 343-3), der mit den gemeinsam verbundenen Ausgängen von den UND-Toren verbunden ist und einen Ausgang aufweist, der mit einem zweiten Eingang von dem zweiten UND-Tor verbunden ist;
und bei dem die Prioritätsschaltung ferner ein ODER-Tor (344) umfaßt, das eine Vielzahl von Eingängen aufweist, von denen jeder entsprechend mit dem Ausgang von dem Flip-Flop (343-1, 343-2, 343-3) von einer von den Gruppen zur Erzeugung des Prioritätssignals (44) verbunden ist, wenn irgendeines von den Flip-Flops ein logischen "1"-Signal erzeugt.

7. Serienumsetzungs-Steuermittel gemäß Anspruch 4, 5 oder 6, das ferner eine Verteilungsschaltung (25), die durch alle CPU's geteilt wird, zur Verteilung der Signale von jeder CPU zu den anderen CPU's umfaßt.

8. Serienumsetzungs-Steuerverfahren zum Gebrauch mit einer zentralen Verarbeitungseinheit (CPU) von einem Mehr-CPU-Informationsverarbeitungssystem, um den Zugriff von der CPU zu einer gemeinsamen Hauptspeichereinheit MSU von dem System zu steuern, welches System auch eine gemeinsame Speichersteuereinheit MCU aufweist, welches Verfahren die Schritte umfaßt:
a) Erfassen eines Auftretens von einer Serienumsetzung in der CPU;
b) Ausgeben einer Ankündigung von dem Auftreten von der Serienumsetzung an die anderen CPU's von dem System, bevor die CPU von der MCU fordert, die MSU-Anforderungen serienumzusetzen;
c) Prüfen, ob die CPU eine Ankündigung von einem Auftreten von einer Serienumsetzung vor irgendeiner anderen von den CPU's empfangen hat;
d) Verzögern eines folgenden MSU-Zugriffs durch die CPU auf das Auftreten von der Serienumsetzung in der CPU folgend, falls solch eine Ankündigung empfangen worden ist; und
e) unmittelbares Ausführen des folgenden MSU-Zugriffs ohne Warten auf einen Abschluß von der Serienumsetzung, die durch die CPU angefordert worden ist, wenn in Schritt (c) innerhalb eines vorbestimmten Zeitbereiches keine Ankündigung empfangen worden ist oder wenn irgendeine Serienumsetzung abgeschlossen worden ist, die durch die anderen CPU's angefordert wurde.

## Revendications

1. Moyen de commande de conversion en série pour l'utiliser dans une unité centrale de traitement CPU d'un système de traitement d'informations à plusieurs unités CPU, destiné à commander l'accès de l'unité CPU à une unité de mémoire centrale MSU commune du système, le système comportant également une unité de commande de mémoire commune MCU connectée à toutes les unités CPU, et chaque unité CPU comportant une antémémoire rapide de petite capacité constituant une structure de mémoire hiérarchique avec l'unité MSU ;
ledit moyen de commande de conversion en série dans chaque unité CPU étant agencé pour émettre un signal de notification (41) vers les autres unités CPU pour notifier l'apparition d'une conversion en série dans sa propre unité CPU et pour recevoir des signaux de notification (42) des autres unités CPU ;
caractérisé en ce que ledit moyen de commande de conversion en série est agencé pour émettre ledit signal de notification (41) avant que sa propre unité CPU demande à l'unité MCU de mettre en série les accès à l'unité MSU, et pour permettre à sa propre unité CPU d'exécuter immédiatement un accès à l'unité MSU qui suit l'apparition de ladite conversion en série, sans attendre l'achèvement de ladite conversion en série, si aucun signal de notification n'est reçu des autres unités CPU pendant une période prédéterminée.

2. Moyen de commande de conversion en série selon la revendication 1, agencé en outre pour retarder ledit accès à l'unité MSU si un signal de notification (42) de n'importe quelle autre unité CPU est reçu pendant ladite période prédéterminée, et pour permettre le déroulement dudit accès à l'unité MSU quand les signaux de notification (42) de toutes les autres unités CPU deviennent non excités.

3. Moyen de commande de conversion en série selon la revendication 2, agencé en outre pour permettre le déroulement dudit accès à l'unité MSU indépendamment d'un signal de notification (42) de n'importe quelle autre unité CPU, quand sa propre unité CPU n'engendre aucun signal de notification (41).

4. Moyen de commande de conversion en série selon l'une quelconque des revendications 2 et 3, comprenant :
un moyen de verrouillage (31) qui sort ledit signal de notification (41) de sa propre unité CPU notifiant une conversion en série aux autres unités CPU, en réponse à un signal d'établissement (43) provenant de l'unité CPU et qui est remis à l'état initial par un signal d'achèvement (45) provenant de l'unité MCU ;
un compteur (33) qui compte le délai dans lequel le signal de notification (41) de sa propre unité CPU doit être transmis ;
un circuit de priorité (34) réagissant aux signaux de notification (42) des autres unités CPU sortis par les autres unités CPU et au signal de sortie du compteur (33), pour engendrer un signal de priorité (44) empêchant l'accès à l'unité MSU par sa propre unité CPU, quand au moins un signal de notification (42) d'une autre unité CPU est reçu pendant ladite période prédéterminée, ladite période étant fonction du temps pris pour que le signal de notification (41) de sa propre unité CPU atteigne les autres unités CPU, et pour permettre ledit accès à l'unité MSU quand le signal de notification (41) de sa propre unité CPU atteint les autres unités CPU avant la réception d'un signal de notification (42) de n'importe quelle autre unité CPU.

5. Moyen de commande de conversion en série selon la revendication 4, dans lequel le compteur (33) comprend un moyen de comptage régressif pour faire régresser une valeur établie par le signal d'établissement (43), cette valeur correspondant à un temps pris pour que le signal de notification (41) de sa propre unité CPU atteigne les autres unités CPU, et un décodeur (333) pour fournir un signal (44'), indiquant une valeur comptée non nulle, à une unité de commande d'instruction (29) de l'unité CPU.

6. Moyen de commande de conversion en série selon l'une quelconque des revendications 4 et 5, dans lequel le circuit de priorité (34) comprend :
une pluralité de groupes comprenant chacun :
une première porte ET (341-1), 341-2, 341-3) ayant une première entrée pour recevoir le signal de sortie dudit compteur (33), et une seconde entrée pour recevoir l'un respectif des signaux de notification (42) des autres unités CPU ;
une seconde porte ET (342-1, 342-2, 342-3) ayant une première entrée pour recevoir l'un respectif des signaux de notification (42) des autres unités CPU ; et,
une bascule (343-1, 343-2, 343-3) connectée aux sorties connectées en commun des portes ET et ayant une sortie connectée à une seconde entrée de la seconde porte ET ;
et dans lequel le circuit de priorité comprend en outre une porte OU (344) ayant une pluralité d'entrées respectivement connectées chacune à la sortie de la bascule (343-1, 343-2, 343-3) de l'un desdits groupes, pour produire ledit signal de priorité (44) quand n'importe laquelle desdites bascules produit un signal logique à "1".

7. Moyen de commande de conversion en série selon l'une quelconque des revendications 4 à 6, comprenant en outre un circuit de distribution (25) partagé par toutes les unités CPU, pour distribuer les signaux provenant de chaque unité CPU aux autres unités CPU.

8. Procédé de commande de conversion en série pour sa mise en oeuvre dans une unité centrale de traitement CPU d'un système de traitement d'informations à plusieurs unités CPU afin de commander l'accès de l'unité CPU à une unité de mémoire centrale MSU commune du système, le système comportant également une unité de commande de mémoire commune MCU, le procédé comprenant des étapes consistant à :
(a) détecter l'apparition d'une conversion en série dans l'unité CPU ;
(b) émettre une notification de l'apparition de la conversion en série vers les autres unités CPU du système, avant que l'unité CPU demande à l'unité MCU de mettre en série les accès à l'unité MSU ;
(c) examiner si l'unité CPU a reçu une notification d'apparition d'une conversion en série de n'importe laquelle des autres unités CPU ;
(d) retarder un accès suivant à l'unité MSU par l'unité CPU, à la suite de l'apparition de la conversion en série dans l'unité CPU, si cette notification a été reçue ; et,
(e) exécuter immédiatement ledit accès suivant à l'unité MSU sans attendre l'achèvement de la conversion en série demandée par l'unité CPU, quand aucune notification dans l'étape (c) n'a été reçue pendant une période prédéterminée ou quand n'importe quelle conversion en série demandée par les autres unités CPU a été achevée.
